# EUROPÄISCHE PATENTSCHRIFT

(11) **EP 1 294 515 B1**
(45) Veröffentlichungstag und Bekanntmachung des Hinweises auf die Patenterteilung: **13.04.2005**
(21) Anmeldenummer: 01936376.1
(22) Anmeldetag: 19.05.2001
(51) Int. Cl.: B23B 51/02

(54) **BOHRERSPITZE FÜR EINEN SPIRALBOHRER UND VERFAHREN ZUM HERSTELLEN EINER SPANNUT IM BEREICH EINER BOHRERSPITZE FÜR EINEN SPIRALBOHRER**
BIT FOR A TWIST DRILL AND METHOD FOR PRODUCING A FLUTE IN THE AREA OF A BIT FOR A TWIST DRILL
MECHE POUR UN FORET HELICOIDAL ET PROCEDE POUR LA PRODUCTION D'UNE GOUJURE DANS LA ZONE D'UNE MECHE POUR UN FORET HELICOIDAL

(30) Priorität: 02.06.2000 DE 10027544
(43) Veröffentlichungstag der Anmeldung: 26.03.2003
(73) Patentinhaber: KENNAMETAL INC., Latrobe, PA 15650-0231 (US)
(72) Erfinder: MÜHLFRIEDEL, Dieter, 91320 Ebermannstadt (DE); BORSCHERT, Bernhard, 96050 Bamberg (DE); SCHWÄGERL, Jürgen, 92648 Vohenstrauss (DE)
(74) Vertreter: Tergau & Pohl Patentanwälte
(86) Internationale Anmeldenummer: PCT/EP2001/005751
(87) Internationale Veröffentlichungsnummer: WO 2001/091959

(56) Entgegenhaltungen:
- WO-A-97/35682
- US-A- 5 678 960
- US-A- 5 947 659

## Beschreibung

Die Erfindung betrifft eine Bohrerspitze für einen Spiralbohrer, die mehrere über eine Querschneide miteinander verbundene Hauptschneiden aufweist, an die sich in Bohrerlängsrichtung entlang von Spannuten verlaufende Nebenschneiden anschließen, wobei zwischen einer an der Innenseite der jeweiligen Nebenschneide anliegenden und senkrecht zur Bohrerlängsrichtung orientierten Tangente und der Radialrichtung ein Nebenspanwinkel definiert ist, der in Längsrichtung des Bohrers zunimmt (siehe z.B. US-A-5 678 960).

Bei einer herkömmlichen Bohrerspitze für einen Spiralbohrer verlaufen die in der Regel zwei Hauptschneiden über die Querschneide geschwungen nach Art eines "S" ineinander über. An die Hauptschneiden schließt sich jeweils eine Hauptfreifläche an, die in eine Spannut übergeht, welche in Bohrerlängsrichtung wendelförmig verlaufend ausgebildet ist. An einer der Randseiten der jeweiligen Spannut ist jeweils die Nebenschneide ausgebildet, die unter Ausbildung einer Schneidecke in die Hauptschneide übergeht. Die Nebenschneide ist also diejenige Schneide, die sich in Längsrichtung des Bohrers wendelförmig entlang der jeweiligen Spannut erstreckt. Unter Bohrerspitze wird hierbei ein Längsbereich des Bohrers verstanden, der an den Stirnschneiden (Hauptschneiden und Querschneide) beginnt und eine Länge aufweist, die in etwa dem zweifachen Bohrerdurchmesser entspricht.

Der Nebenspanwinkel, wie er oben definiert ist, gibt in etwa die geometrische Orientierung eines die Nebenschneide bildenden Schneidkeils bezüglich der Radialrichtung, also der Richtung senkrecht zur Bohrerlängsachse, an. Von einem positiven Nebenspanwinkel, also einem Spanwinkel über 0°, wird dann gesprochen, wenn der Schneidkeil spitz zuläuft. Dementsprechend bedeutet ein negativer Spanwinkel, dass der Schneidkeil stumpf zuläuft. Bei der herkömmlichen Bohrerspitze mit der geschwungenen Ausbildung der Hauptschneiden und der Querschneide liegt ein positiver Nebenspanwinkel vor. Dieser erstreckt sich über die gesamte Schneidlänge des Bohrers mit einem konstanten Wert.

Der positive Nebenspanwinkel hat den Vorteil, dass die Kontaktfläche zwischen den aus dem Werkstück beim Bohrvorgang abgetragenen Spänen und der Bohrungswand des Werkstücks möglichst gering ist. Die Späne werden also sehr rasch abgeführt.

Aus der EP 0 712 343 B1 ist ein Spiralbohrer mit S-förmig geschwungenen Hauptschneiden zu entnehmen. Beim bekannten Spiralbohrer ist im Bereich der Hauptschneiden ein positiver Nebenspanwinkel vorgesehen und der Krümmungsradius der Spannut nimmt in Bohrerlängsrichtung zu.

Im Bereich der Hauptschneiden hat der positive Nebenspanwinkel jedoch den Nachteil, dass der Schneidkeil im Bereich der Schneidecke aufgrund seiner spitz zulaufenden Geometrie vergleichsweise schwach ausgebildet ist. Gerade im Bereich des Schneidecks treten allerdings beim Bohren sehr hohe Kräfte auf. Die Belastung wird darüber hinaus erhöht, da die Schneidecke beim Bohren sich quasi in den Werkstoff einhakt. Damit besteht insbesondere an dieser Stelle die Gefahr eines Ausbrechens des Bohrers. Weiterhin nachteilig ist, dass der abgehobene Span gebogen wird, was einen zusätzlichen Kraftaufwand und somit eine zusätzliche Zerspanleistung erfordert.

Der Erfindung liegt die Aufgabe zugrunde, die erwähnten Nachteile zu beseitigen.

Die Aufgabe wird gemäß der Erfindung gelöst durch eine Bohrerspitze für einen Spiralbohrer, die mehrere über eine Querschneide miteinander verbundene Hauptschneiden aufweist, an die sich in Bohrerlängsrichtung entlang von Spannuten verlaufende Nebenschneiden anschließen, wobei in Bohrerlängsrichtung der Nebenspanwinkel zunimmt und die Hauptschneiden geradlinig in Richtung zur Querschneide verlaufen. Der Nebenspanwinkel beträgt im Bereich der Schneidecke insbesondere 0°. Damit ist ein besonders gutes Schneiden bei hoher Stabilität erreicht. Die Schneidecke ist dadurch sehr robust und widerstandsfähig.

Dieser Ausgestaltung liegt zum einen die Überlegung zugrunde, zur Vermeidung einer zu hohen Belastung geradlinig verlaufende Hauptschneiden vorzusehen. Dadurch ist der Schneidkeil im Bereich des Schneidecks vergleichsweise massiv und damit stabil ausgebildet. Die Gefahr einer übermäßigen Belastung in diesem Bereich ist dadurch gering gehalten. Der bei einer radial orientierten geradlinigen Hauptschneide gebildete Nebenspanwinkel von 0° hat allerdings den wesentlichen Nachteil, dass im Verlauf über die Schneidlänge des Bohrers der Span nicht ausreichend rasch von der Bohrungswand entfernt wird. Unter Umständen führt dies zu einer unerwünschten Oberflächenrauhigkeit der Bohrungswand. Zudem ist für die Ausbildung eines Nebenspanwinkels von 0° beim Schleifen des Bohrers eine teure Formschteifscheibe mit aufwendigen Geometrie erforderlich. Demgegenüber kann bei einem positiven Nebenspanwinkel eine sogenannte Normschleifscheibe mit einfacher Geometrie verwendet werden, die vergleichsweise günstig ist.

Der erfindungsgemäßen Ausgestaltung liegt daher weiterhin die Überlegung zugrunde, dass an unterschiedlichen Stellen der Schneidlänge des Bohrers unterschiedliche Belastungen auftreten, und dass für die unterschiedlichen Belastungen unterschiedliche Nebenspanwinkel, also ein variabler Verlauf des Nebenspanwinkelwerts in Bohrerlängsrichtung, von Vorteil sind. Durch die Ausbildung der Bohrerspitze mit zunehmendem Nebenspanwinkel in Bohrerlängsrichtung wird daher für die jeweilige lokale Belastung ein ortsabhängig optimierter Nebenspanwinkel eingestellt.

Durch den insbesondere kontinuierlich zunehmenden Nebenspanwinkel wird erreicht, dass die Bohrerspitze im Bereich der Schneidecke aufgrund eines geringen Nebenspanwinkels vergleichsweise stabil ausgebildet ist, und dass weiterhin im weiteren Verlauf der Nebenschneide sich ein zunehmend größerer positiver Nebenspanwinkel ausbildet, welcher für einen schnellen Spanabfluss sorgt.

Eine derartig ausgebildete Bohrerspitze wird vorzugsweise in einem kontinuierlichen Schleifverfahren hergestellt. Die Bohrerspitze lässt sich aber auch herstellen, indem bei einer herkömmlichen Bohrerspitze mit positivem Nebenspanwinkel und geschwungenen Hauptschneiden im Bereich der Schneidecke die Hauptschneiden in einem separaten Schleifschritt gerade geschliffen werden. Dies hat allerdings den Nachteil, dass störende Übergänge, also Kanten, im Bereich der Schneiden erzeugt werden.

Vorzugsweise liegt der Nebenspanwinkel an den Hauptschneiden im Bereich zwischen +5° und -5°. Insbesondere liegt er dabei zwischen 0° und -5°. Diese Ausgestaltung mit keinem Nebenspanwinkel oder mit geringfügig negativem Nebenspanwinkel bewirkt, dass eine hohe Stabilität des Schneidkeils im Bereich der Schneidecke gewährleistet ist. Andererseits ist ein Verhaken der Schneidecke beim Eingreifen der Bohrerspitze in den Werkstoff vermieden. Die Wahl des speziellen Nebenspanwinkels hängt dabei von dem zu bearbeitenden Werkstoff ab. Negative Spanwinkel, also eine stumpfe Nebenschneide, werden beispielsweise für weiche Werkstoffe wie Leichtmetalle oder Kunststoffe in speziellen Fällen eingesetzt.

Die Schneiden, insbesondere die Nebenschneiden des Bohrers sind bevorzugt ohne Schutzfase, also ohne Anschrägung, ausgebildet. Gleichwohl können auch Schutzfasen vorgesehen sein. In diesem Fall verläuft die jeweilige Hauptschneide nicht vollständig geradlinig bis zur Nebenschneide, sondern nur bis zur Schutzfase.

Um im weiteren Verlauf der Schneidlänge des Bohrers eine rasche Spanentfernung von der Bohrungswand zu erzielen, nimmt der Nebenspanwinkel bevorzugt bis auf einen vergleichsweise großen Endwert von bis zu +25° zu.

Da das Problem des Ausbruchs der Schneide nur im unmittelbaren Bereich an den Hauptschneiden auftritt, ist der Endwert vorzugsweise bereits nach einer Länge in Bohrerlängsrichtung erreicht, die dem 0,25- bis 1,5-fachen und insbesondere dem einfachen Bohrerdurchmesser entspricht.

Vorzugsweise weist die Bohrerspitze und insbesondere der gesamte Spiralbohrer einen Bohrerkem mit einem gleichbleibenden oder in Bohrerlängsrichtung abnehmenden Kerndurchmesser auf. Ein Spiralbohrer mit einem gleichbleibenden Kerndurchmesser ist besonders einfach herzustellen. Der abnehmende Kerndurchmesser in Richtung der Bohrerlängsachse hat den Vorteil, dass dadurch die Spannuten tiefer werden und somit mehr Spanraum zur Verfügung steht. Dadurch ist ein besserer Spanabfluss erreicht und ein Spanstau vermieden. Die Verjüngung des Kerndurchmessers liegt vorzugsweise in einem Bereich zwischen 10 und 20%, bezogen auf eine Länge von etwa 100 mm.

Die Aufgabe wird gemäß der Erfindung weiterhin gelöst durch ein Verfahren zum Herstellen einer Spannut im Bereich einer Bohrerspitze für einen Spiralbohrer mit den Merkmalen des Anspruchs 6.

Mit einem derartigen Verfahren wird ein besonders robuster Bohrer im Bereich der Hauptschneiden erhalten und zugleich gewährleistet, dass beim Bohren im Bereich der Nebenschneiden ein schneller Spanabfluss erfolgt und ein Bohrloch mit hoher Oberflächengüte erhalten wird.

Für ein einfaches und kostengünstiges Herstellen werden dabei die unterschiedlichen Nebenspanwinkel in einem kontinuierlichen Schleifvorgang erzeugt.

Vorzugsweise wird hierzu beim Schleifvorgang eine Schleifscheibe und die Bohrerspitze relativ zueinander in einer mehrdimensionalen Bewegung im Raum geführt. Eine derartige mehrdimensionale Bewegung im Raum ist mit den heutzutage üblichen CNC-Werkzeugmaschinen durchführbar. Die Schleifscheibe und die Bohrerspitze führen dabei zueinander relativ komplexe Bewegungen aus.

Vorzugsweise wird beim Schleifverfahren eine Schleifscheibe eingesetzt, die als eine für mehrere Bohrertypen einsetzbare Normschleifscheibe ausgebildet ist. Unter Bohrertypen werden hierbei Spiralbohrer mit beispielsweise unterschiedlichem Nebenspanwinkelverlauf verstanden. Eine derartige Normschleifscheibe ist beispielsweise gleichermaßen geeignet zur Herstellung eines Spiralbohrers herkömmlichen Typs, welcher einen über die Schneidlänge gleichbleibenden positiven Nebenspanwinkel aufweist, und bei dem die Hauptschneiden über die Querschneide nach Art eines S geschwungen verlaufen.

Alternativ zu dem Schleifen zur Erzeugung der unterschiedlichen Nebenspanwinkel lassen sich diese in vorteilhafter Weise auch durch ein Spritzgussverfahren herstellen. Der Vorteil eines solchen Spritzgussverfahrens ist darin zu sehen, dass auch komplexe Geometrien der Bohrerspitze schnell und einfach hergestellt werden können. Die Komplexität der Geometrie findet ihre Grenze lediglich in spritzgusstechnischen Beschränkungen sowie in Beschränkungen durch den Formenbau für die Bohrerspitze.

Eine derartig hergestellte Bohrerspitze ist beispielsweise als separates Bohrerspitzenteil ausgebildet, welches als Austauschteil in einen entsprechend ausgebildeten Bohrergrundkörper einsteckbar ist, welches zumindest zu einem Teil die Nebenschneiden umfasst. Die Bohrerspitze ist alternativ als integrales Bestandteil eines Spiralbohrers, also einstückig mit diesem ausgebildet. Bei der integralen Ausbildung wird unmittelbar im Anschluss an das Schleifen der Spannut im Bereich der Bohrerspitze in einfacher und schneller Weise die komplette Spannut über die gesamte Schneidlänge ausgeschliffen, bzw. wird der komplette Bohrer spritzgegossen.

Ein Ausführungsbeispiel der Erfindung wird im Folgenden anhand der Figuren näher erläutert. Es zeigen jeweils in schematischen Darstellungen:
- Fig.1: eine Draufsicht auf die Bohrerspitze eines herkömmlichen Bohrers mit geschwungenen Hauptschneiden,
- Fig. 2: eine Draufsicht auf eine erfindungsgemäße Bohrerspitze mit geradlinig verlaufenden Hauptschneiden,
- Fig. 3a-3c: schematische Schnittdarstellungen durch eine Bohrerspitze nach Fig. 2 an unterschiedlichen Längenpositionen in Bohrerlängsrichtung,
- Fig. 4: eine Seitenansicht eines Bohrers in einer Aufnahme relativ zu einer Schleifscheibe zur Erläuterung des Schleifverfahrens,
- Fig. 5: die Darstellung nach Fig. 4 in einer Draufsicht,
- Fig. 6: eine vergrößerte Darstellung der mit einem Kreis markierten Stelle in Fig. 5 im Bereich des Kontakts zwischen der Schleifscheibe und der Bohrerspitze,
- Fig. 7: eine beispielhafte Schnittansicht einer Normschleifscheibe,
- Fig. 8a-8c: schematische Schnittbilder durch eine Bohrerspitze bei konstanter Bohrerlänge zu unterschiedlichen Zeitmomenten beim Schleifvorgang, und
- Fig. 9: eine Seitenansicht eines Bohrers mit Angabe der Schnittposition gemäß Fig. 8a-8c.

In den Figuren sind gleichwirkende Teile mit denselben Bezugszeichen versehen.

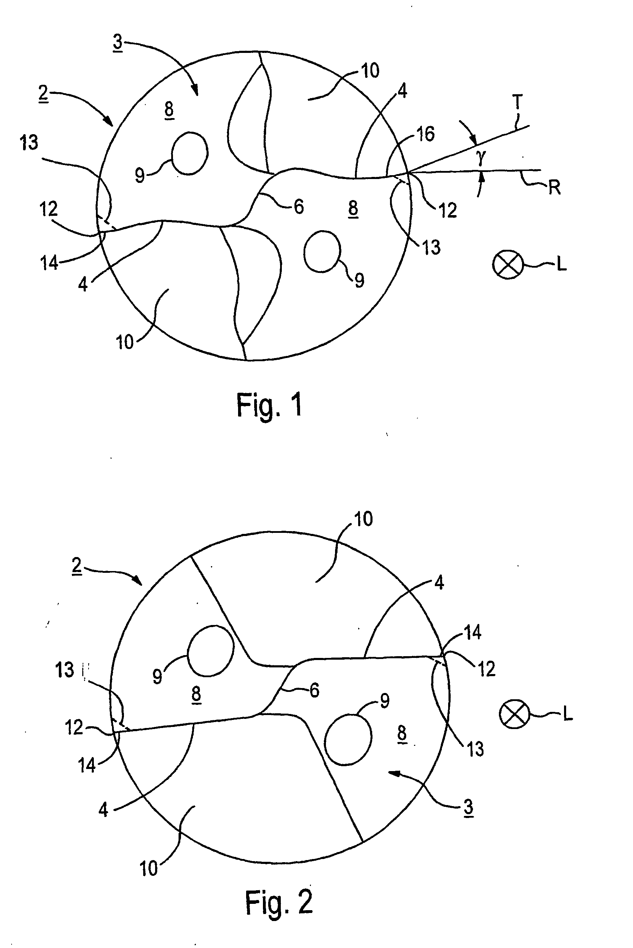

Der in Fig. 1 dargestellte herkömmliche Spiralbohrer 2, kurz als Bohrer bezeichnet, weist an dem stirnseitigen Ende seiner Bohrerspitze 3 zwei Hauptschneiden 4 auf, die über eine Querschneide 6 miteinander verbunden sind. Die Hauptschneiden 4 sowie die Querschneide 6 sind in etwa S-förmig gewunden. An die beiden Hauptschneiden 4 schließt sich jeweils eine Hauptfreifläche 8 an, die jeweils in eine Spannut 10 übergeht.

Die beiden Hauptschneiden 4 erstrecken sich in etwa in Radialrichtung des Bohrers 2. Die Hauptfreiflächen 8 weisen jeweils Kühlmittelbohrungen 9 auf, über die der Bohrer 2 beim Bohrvorgang kühlbar ist. An die Hauptschneiden 4 schließt sich jeweils endseitig unter Ausbildung einer Schneidecke 12 jeweils eine Nebenschneide 14 an, die sich in Bohrerlängsrichtung L, also in die Papierebene hinein, erstrecken. Die Bohrerlängsrichtung L ist in Fig. 1 durch ein in einem Kreis angeordneten Kreuz dargestellt.

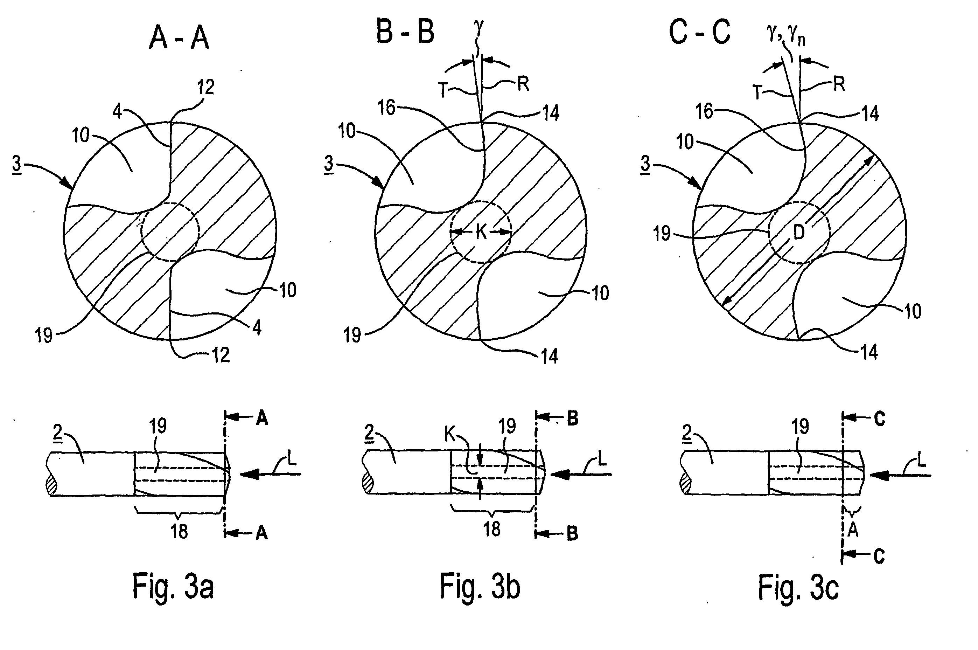

Durch die geschwungene Ausbildung der Hauptschneiden 4 ist im Bereich der Schneidecke 12 ein positiver Nebenspanwinkel γ gebildet. Dieser ist definiert durch den Winkel zwischen einer Tangente T, welche an der Innenseite 16 der Nebenschneide 14 anliegt, und der Radialrichtung R. Sowohl die Tangente T als auch die Radialrichtung R erstrecken sich senkrecht zur Bohrerlängsrichtung L und liegen damit in einer gemeinsamen Ebene. Die Definition des Nebenspanwinkel γ ist am besten aus der Fig. 3c zu entnehmen. Die darin dargestellte Schnittebene senkrecht zur Bohrerlängsrichtung ist zugleich die gemeinsame Ebene für die Tangente T und die Radialrichtung R.

Der Nebenspanwinkel γ wird als positiv bezeichnet, wenn - wie im Falle der Fig. 1 - die Schneidecke 12 spitz zuläuft, wenn also die Schneidecke 12 insbesondere über die Bohrermitte hinaussteht. Umgekehrt liegt ein negativer Nebenspanwinkel γ vor, wenn eine stumpfe Schneidecke 12 gebildet ist. Entlang den Nebenschneiden 14 kann eine Schutzfase 13 vorgesehen sein, die als eine gestrichelt dargestellte Anschrägung ausgebildet ist.

Dadurch, dass beim herkömmlichen Bohrer 2 gemäß Fig. 1 die Schneidecke 12 über die Bohrermitte hinaussteht, ist nur eine eingeschränkte Belastung der Schneidecke 12 möglich, da sie relativ dünn ausgebildet ist. Denn aufgrund der wendelförmig verlaufenden Spannut 10 bildet die Schneidecke 12 sowohl in Radialrichtung R als auch in Bohrerlängsrichtung L einen Überhang. Die Schneidecke 12 ist die Stelle, mit der der Bohrer 2 mit seiner Stirnseite in das zu bearbeitende Werkstück eingreift, so dass dort sehr hohe Belastungen auftreten.

Der positive Nebenspanwinkel γ gemäß Fig. 1 erstreckt sich beim herkömmlichen Bohrer 2 gleichbleibend über die gesamte Nebenschneide 14 hinweg. Dies führt dazu, dass die Spannut eine Wölbung aufweist, die dafür sorgt, dass die abgeschnittenen Späne sehr schnell von der Bohrungswand des zu bearbeitenden Werkstücks entfernt werden. Die Krümmung der Spannut 10 im Anschluss an die Nebenschneide 14 bewirkt zudem, dass die Späne einen Krümmungsradius ausbilden, der sich im Wesentlichen nach dem Krümmungsradius der Spannut 10 richtet.

Im Unterschied zu der in Fig. 1 dargestellten Bohrerspitze 3 weist die in Fig. 2 dargestellte Bohrerspitze 3 jeweils geradlinig verlaufende Hauptschneiden 4 auf, die sich im Wesentlichen radial in Richtung zur Querschneide 6 erstrecken. Der Nebenspanwinkel γ beträgt in diesem Fall demnach 0° an den Hauptschneiden 4. Dadurch ist die Schneidecke 12 wesentlich stabiler ausgebildet, so dass höhere Kräfte aufgenommen werden können, ohne dass die Gefahr eines Ausbrechens besteht. Um zugleich den positiven Effekt eines positiven Nebenspanwinkels γ im weiteren Verlauf der Nebenschneiden 14 in Bohrerlängsrichtung L zu erreichen, nimmt der Nebenspanwinkel γ in Bohrerlängsrichtung L insbesondere kontinuierlich zu.

Die kontinuierliche Zunahme des Nebenspanwinkels γ in Bohrerlängsrichtung L ist am besten aus den Figuren 3a bis 3c zu entnehmen. Diese Figuren sind jeweils zweigeteilt, wobei im oberen Bildteil ein Querschnitt durch die Bohrerspitze 3 dargestellt ist und unmittelbar darunter die Position des Querschnitts im Hinblick auf die Bohrerlängsrichtung L. Hierzu ist schematisch jeweils ein Bohrer 2 in Seitenansicht dargestellt, welcher in seinem vorderen Bereich einen Schneidbereich 18 aufweist. Die Position des Querschnitts ist durch eine senkrechte Linie angedeutet. Fig. 3a stellt einen Schnitt A-A unmittelbar im Anschluss an die Hauptschneiden 4 dar, also unmittelbar im Bereich der Schneidecke 12. Fig. 3b zeigt einen Schnitt B-B durch den Bohrer 2 kurz hinter der Schneidecke 12 und Fig. 3c einen Schnitt C-C durch den Bohrer bei einer Länge A, bei der der Nebenspanwinkel γ bereits einen Endwert γₙ erreicht hat. In den Figuren ist ein Bohrerkern 19 jeweils gestrichelt dargestellt. Dieser weist einen über die Bohrerlängsrichtung L gleichbleibenden Kerndurchmesser K auf. Dieser kann sich alternativ auch von der Bohrerspitze 3 aus in Bohrerlängsrichtung L verjüngen.

Wie Fig. 3a zu entnehmen ist, verlaufen anfänglich die Hauptschneiden 4 geradlinig, also in radialer Richtung zur Bohrermitte. Der Nebenspanwinkel γ nimmt also einen Wert von 0° ein.

Wie den Fig. 3b und 3c zu entnehmen ist, nimmt der Wert des Nebenspanwinkels γ kontinuierlich zu, so dass die Spannut 10 zunehmend ausgewölbt wird, so dass die Nebenschneide 14 von der Spannut 10 hintergriffen wird. Die Spannut 10 ist daher zur Nebenschneide 14 hin konkav gekrümmt.

Der Endwert γₙ des Nebenspanwinkel γ beträgt vorzugsweise etwa 25° und wird bei der Länge A erreicht, die dem 0,25-fachen bis 1,5-fachen Bohrdurchmesser D entspricht. Vorzugsweise wird der Endwert γₙ beim 1-fachen Bohrerdurchmesser D erreicht.

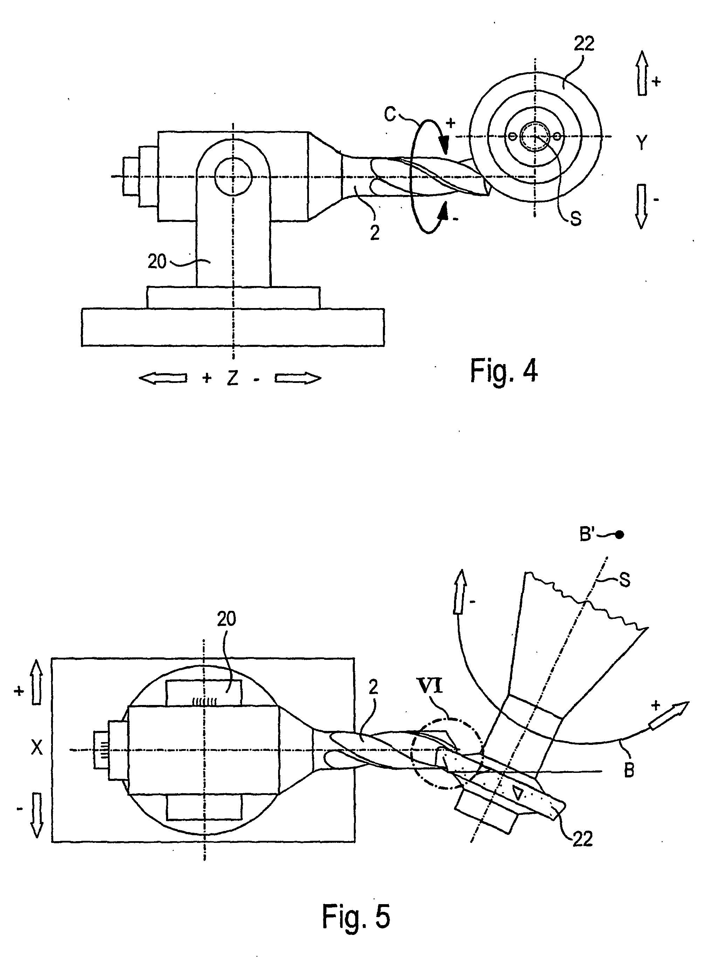

Anhand den Fig. 4 bis 7 wird im Folgenden ein Schleifverfahren zur Herstellung einer Bohrerspitze 3 mit zunehmendem Nebenspanwinkel γₙ erläutert. Nach Fig. 4 und 5 ist der Bohrer 2 in einer Aufnahme 20 insbesondere einer CNC-Werkzeugmaschine eingespannt. Die Aufnahme 20 ist entlang einer Zustellachse Z verschiebbar. Die Aufnahme 20 ist zusätzlich seitlich entlang einer Seitenachse X verschiebbar gelagert. Weiterhin ist der Bohrer 2 um eine Rotationsachse C drehbar, die in Richtung der Bohrerlängsrichtung L verläuft. Zum Schleifen wird der Bohrer 2 an eine als Normschleifscheibe ausgebildete Schleifscheibe 22 herangeführt, die um eine Drehachse S drehbar ist. Die Schleifscheibe 22 ist in einer lateralen Verschieberichtung Y auf die Rotationsachse C des Bohrers 2 zu- bzw. wegfahrbar. Die Verschieberichtung Y ist demnach senkrecht zur Drehachse S orientiert, weiche wiederum senkrecht zur Rotationsachse C des Bohrers 2 orientiert ist. Zusätzlich ist die Schleifscheibe 22 um eine Schwenkachse B verschwenkbar, wie dies der Fig. 5 zu entnehmen ist. Die unterschiedlichen Bewegungsrichtungen der einzelnen Achsen B,C,X,Y,Z sind jeweils durch ein + bzw. - angedeutet.

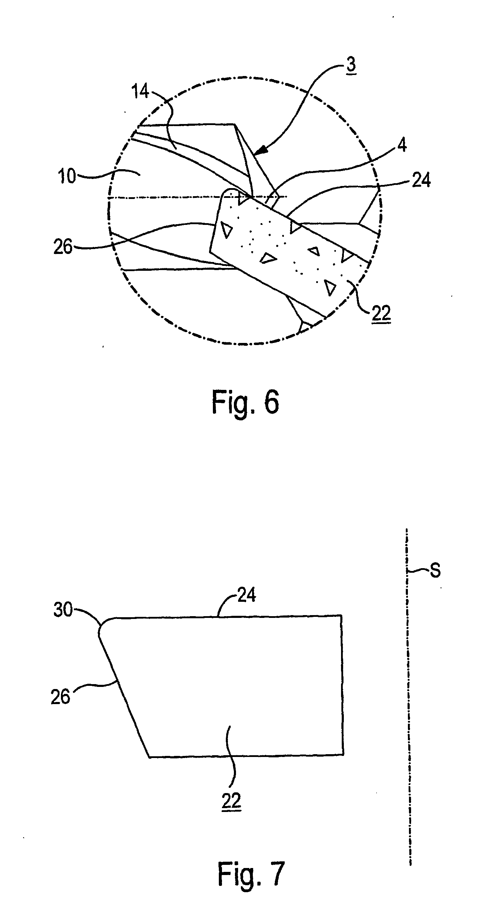

Anhand der vergrößerten Darstellung gemäß Fig. 6 im Bereich der Bohrerspitze 3 ist zu entnehmen, dass zu Beginn des Schleifvorgangs die Hauptschneide 4 mit der Seitenfläche 24 der Schleifscheibe 22 bearbeitet wird, wodurch eine geradlinig verlaufende Hauptschneide 4 ausgebildet wird. Die Stirnfläche 26 der Schleifscheibe 22 verläuft schräg und geht unter Ausbildung einer Krümmung 30 in die Seitenfläche 24 über. Mit der Krümmung 30 der Schleifscheibe 22 wird im Wesentlichen der Krümmungsradius der Spannut 10 bestimmt. In Fig. 7 ist eine typische Geometrie der als Normschleifscheibe ausgebildeten Schleifscheibe 22 in einer Schnittansicht vergrößert dargestellt. Dabei ist lediglich die linke Querschnittsseite bezogen auf die Drehachse S der Schleifscheibe 22 dargestellt. Die Schleifscheibe 22 hat eine im Wesentlichen trapezartige Querschnittsfläche, wobei die obere Seite der beiden parallelen Trapezseiten die Seitenfläche 24 bildet, welche unter Ausbildung der Krümmung 30 in die Stirnseite 26 übergeht. Eine derartige Schleifscheibe 22 findet üblicherweise Einsatz zum Schleifen eines Bohrers 2 wie er zur Fig. 1 beschrieben wurde.

Um mit einer solchen Schleifscheibe 22 die gewünschten unterschiedlichen Nebenspanwinkel γ zu erhalten, ist eine mehrdimensionale Relativbewegung im Raum zwischen der Schleifscheibe 22 und dem Bohrer 2 erforderlich.

Zum Schleifen des Bohrers 2 wird die Aufnahme 20 entlang der Zustellachse Z über den gesamten Schleifvorgang hinweg zugestellt. Zu Beginn des Schleifvorgangs findet keine oder nur eine geringfügige Rotation um die Rotationsachse C statt. Die Rotationsachse C entspricht der Längsachse des Bohrers 2. Zunächst wird die Schleifscheibe 22 in positiver Y-Richtung kontinuierlich verfahren, wobei gleichzeitig die Aufnahme 20 ebenfalls in positiver Richtung der X-Seitenachse verfahren wird. Diesen Bewegungsrichtungen ist eine Schwenkbewegung der Schleifscheibe 22 um die Schwenkachse B um den Drehpunkt B' überlagert, und zwar in negativer Richtung der Schwenkachse B.

Bei einem derartigen Schleifvorgang wird die Hauptschneide 4 zunächst mit der Seitenfläche 24 der Schleifscheibe 22 geschliffen, so dass die Hauptschneide 4 geradlinig verläuft. Zur Ausbildung des positiven Spanwinkels wird die Schleifscheibe 22 dann derart gegen den Bohrer 2 geschwenkt, dass die gekrümmte Stimfläche 26 der Schleifscheibe 22 anschließend an der Nebenschneide 6 den Krümmungsradius der Spannut 10 ausbildet, wie er aus Fig. 3c zu entnehmen ist.

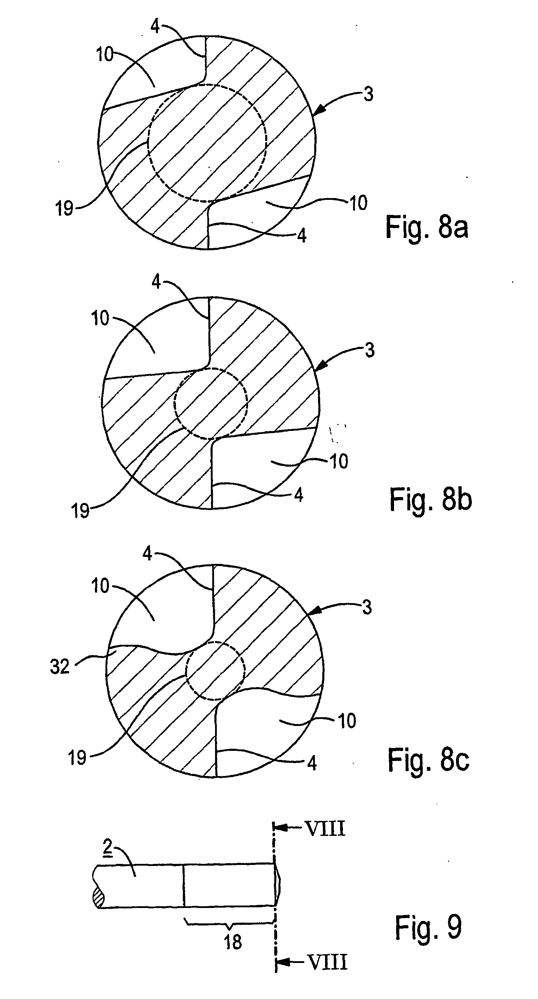

Der Verlauf des Schleifvorgangs im Bereich unmittelbar an den Hauptschneiden 4 für unterschiedliche Schleifzeitpunkte ist aus den Figuren 8a bis 8c zu entnehmen. Die Fig. 8a bis 8c stellen jeweils einen Schnitt VIII-VIII durch die Bohrerspitze 3 dar (vgl. Fig. 9). Die Hauptschneiden 4 verlaufen daher in diesen drei Figuren jeweils geradlinig. Beim Fortschreiten des Schleifvorgangs verändert sich im Wesentlichen die Geometrie der Spannut 10. Zu Beginn des Schleifvorgangs ist die Bohrerspitze 3 gemäß Fig. 8a ausgebildet. Die Geometrie der Spannut 10 entspricht hier im Wesentlichen der Geometrie der Querschnittsfläche der Schleifscheibe 22 gemäß Fig. 7. Mit zunehmendem Fortgang wird die Schleifscheibe 22 zunehmend in Richtung der Bohrermitte geführt, wie dies der Fig. 8b zu entnehmen ist. Im weiteren Verlauf wird durch die Schwenkbewegung der Schleifscheibe 22 um die Schwenkachse B der der Hauptschneide 4 gegenüberliegende Randbereich 32 der Spannut 10 geschwungen ausgebildet.

### Bezugszeichenliste

- 2: Bohrer
- 3: Bohrerspitze
- 4: Hauptschneide
- 6: Querschneide
- 8: Hauptfreifläche
- 9: Kühlmittelbohrung
- 10: Spannut
- 12: Schneideck
- 13: Schutzfase
- 14: Nebenschneide
- 16: Innenseite
- 18: Schneidbereich
- 19: Bohrerkern
- 20: Aufnahme
- 22: Schleifscheibe
- 24: Seitenfläche
- 26: Stimfläche
- 30: Krümmung
- 32: Randbereich

- γ: Nebenspanwinkel
- γₙ: Endwert

- A: Länge
- B: Schwenkachse
- B': Drehpunkt
- C: Rotationsachse
- D: Bohrerdurchmesser
- K: Kerndurchmesser
- L: Bohrerlängsrichtung
- R: Radialrichtung
- S: Drehachse
- T: Tangente
- Y: Verschieberichtung
- Z: Zustellachse
- X: Seitenachse

## Patentansprüche

1. Bohrerspitze (3) für einen Spiralbohrer (2), die mehrere über eine Querschneide (6) miteinander verbundene Hauptschneiden (4) aufweist, an die sich in Bohrerlängsrichtung (L) entlang von Spannuten (10) verlaufende Nebenschneiden (14) anschließen, wobei zwischen einer an der Innenseite (16) der jeweiligen Nebenschneide (14) anliegenden und senkrecht zur Bohrerlängsrichtung (L) orientierten Tangente (T) und der Radialrichtung (R) ein Nebenspanwinkel (γ) definiert ist, der in Bohrerlängsrichtung (L) zunimmt,
**dadurch gekennzeichnet,**
**dass** die Hauptschneiden (4) geradlinig in Richtung zur Querschneide (6) verlaufen.

2. Bohrerspitze (3) nach Anspruch 1,
**dadurch gekennzeichnet,**
**dass** der Nebenspanwinkel (γ) an den Hauptschneiden (4) im Bereich zwischen +5° und -5°, vorzugsweise zwischen 0° und -5° liegt.

3. Bohrerspitze (3) nach Anspruch 1 oder 2,
**dadurch gekennzeichnet,**
**dass** der Nebenspanwinkel (γ) bis auf einen Endwert (γₙ) von bis zu +25° zunimmt.

4. Bohrerspitze (3) nach Anspruch 3,
**dadurch gekennzeichnet,**
**dass** der Endwert (γₙ) in Bohrerlängsrichtung (L) nach einer Länge (A) erreicht ist, die dem 0,25 bis 1,5-fachen Bohrerdurchmesser (D), und insbesondere dem 1-fachen Bohrerdurchmesser (D) entspricht.

5. Bohrerspitze (3) nach einem der vorhergehenden Ansprüche,
**dadurch gekennzeichnet,**
**dass** sie einen Bohrerkern (19) mit gleichbleibendem oder in Bohrerlängsrichtung (L) abnehmendem Kerndurchmesser (K) aufweist.

6. Verfahren zum Herstellen einer Spannut (10) im Bereich einer Bohrerspitze (3) für einen Spiralbohrer (2) mit mehreren über eine Querschneide (6) miteinander verbundene Hauptschneiden (4), an die sich in Bohrerlängsrichtung (L) jeweils eine entlang der Spannut (10) verlaufende Nebenschneide (14) anschließen, wobei zwischen einer an der Innenseite (16) der jeweiligen Nebenschneide (14) anliegenden und senkrecht zur Bohrerlängsrichtung (L) orientierten Tangente (T) und der Radialrichtung (R) ein Nebenspanwinkel (γ) definiert ist, wobei ein in Bohrerlängsrichtung (L) zunehmender Nebenspanwinkel (γ) erzeugt wird
**dadurch gekennzeichnet,**
**dass** die Hauptschneiden (4) in Richtung zur Querschneide (6) geradlinig verlaufend erzeugt werden.

7. Verfahren nach Anspruch 6,
**dadurch gekennzeichnet,**
**dass** der zunehmende Nebenspanwinkel (γ) in einem kontinuierlichen Schleifvorgang erzeugt wird.

8. Verfahren nach Anspruch 7,
**dadurch gekennzeichnet,**
**dass** beim Schleifvorgang eine Schleifscheibe (22) und die Bohrerspitze (3) relativ zueinander in einer mehrdimensionalen Bewegung im Raum geführt werden.

9. Verfahren nach Anspruch 7 oder 8,
**dadurch gekennzeichnet,**
**dass** die Schleifscheibe (22) als eine für mehrere Bohrertypen einsetzbare Normschleifscheibe ausgebildet ist.

10. Verfahren nach Anspruch 6,
**dadurch gekennzeichnet,**
**dass** der zunehmende Nebenspanwinkel (γ) durch ein Spritzgussverfahren hergestellt wird.

## Claims

1. Drill point (3) for a twist drill (2), which drill point (3) has a plurality of main cutting edges (4) which are connected to one another via a chisel edge (6) and adjoining which in the drill longitudinal direction (L) are secondary cutting edges (14) running along flutes (10), a secondary rake angle (γ) being defined between a tangent (T), adjacent to the inside (16) of the respective secondary cutting edge (14) and oriented perpendicularly to the drill longitudinal direction (L), and the radial direction (R), this secondary rake angle (γ) increasing in the drill longitudinal direction (L), **characterized in that** the main cutting edges (4) run rectilinearly in the direction of the chisel edge (6).

2. Drill point (3) according to Claim 1, **characterized in that** the secondary rake angle (γ) at the main cutting edges (4) lies within the range of between +5° and -5°, preferably between 0° and -5°.

3. Drill point (3) according to Claim 1 or 2, **characterized in that** the secondary rake angle (γ) increases up to a final value (γₙ) of up to +25°.

4. Drill point (3) according to Claim 3, **characterized in that** the final value (γₙ) in the drill longitudinal direction (L) is reached after a length (A) which corresponds to 0.25 to 1.5 times the drill diameter (D), in particular 1 times the drill diameter (D).

5. Drill point (3) according to one of the preceding claims, **characterized in that** it has a drill core (19) having a uniform core diameter (K) or a core diameter (K) decreasing in the drill longitudinal direction (L).

6. Method of producing a flute (10) in the region of a drill point (3) for a twist drill (2) having a plurality of main cutting edges (4) which are connected to one another via a chisel edge (6) and adjoining which in the drill longitudinal direction (L) is a respective secondary cutting edge (14) running along the flute (10), a secondary rake angle (γ) being defined between a tangent (T), adjacent to the inside (16) of the respective secondary cutting edge (14) and oriented perpendicularly to the drill longitudinal direction (L), and the radial direction (R), a secondary rake angle (γ) which increases in the drill longitudinal direction (L) being produced, **characterized in that** the main cutting edges (4) are produced so as to run rectilinearly in the direction of the chisel edge (6).

7. Method according to Claim 6, **characterized in that** the increasing secondary rake angle (γ) is produced in a continuous grinding operation.

8. Method according to Claim 7, **characterized in that**, during the grinding operation, a grinding wheel (22) and the drill point (3) are directed in a multidimensional spatial motion relative to one another.

9. Method according to Claim 7 or 8, **characterized in that** the grinding wheel (22) is designed as a standard grinding wheel which can be used for a plurality of drill types.

10. Method according to Claim 6, **characterized in that** the increasing secondary rake angle (γ) is produced by a die-casting process.

## Revendications

1. Pointe de foret (3) pour un foret hélicoïdal (2), qui présente plusieurs tranchants de coupe principaux (4) reliés mutuellement par l'intermédiaire d'un tranchant de coupe transversal (6) et auxquels se raccordent des tranchants de coupe auxiliaires (14) s'étendant dans la direction longitudinale (L) du foret le long de goujures (10), un angle de coupe auxiliaire (γ), qui est croissant dans la direction longitudinale (L) du foret, étant défini entre une tangente (T) appliquée sur le côté intérieur (16) du tranchant de coupe auxiliaire (14) respectif et orientée perpendiculairement à la direction longitudinale (L) du foret, et la direction radiale (R),
**caractérisée en ce que** les tranchants de coupe principaux (4) s'étendent de manière rectiligne en direction du tranchant de coupe transversal (6).

2. Pointe de foret (3) selon la revendication 1,
**caractérisée en ce que** l'angle de coupe auxiliaire (γ) au niveau des tranchants de coupe principaux (4), se situe dans une plage entre +5° et -5°, de préférence entre 0° et -5°.

3. Pointe de foret (3) selon la revendication 1 ou 2,
**caractérisée en ce que** l'angle de coupe auxiliaire (γ) est croissant jusqu'à une valeur terminale (γn) allant jusqu'à +25°.

4. Pointe de foret (3) selon la revendication 3,
**caractérisée en ce que** la valeur terminale (γn) est atteinte dans la direction longitudinale (L) du foret, après une longueur (A), qui correspond à 0,25 à 1,5 fois le diamètre (D) du foret, et notamment à 1 fois le diamètre (D) du foret.

5. Pointe de foret (3) selon l'une des revendications précédentes, **caractérisée en ce qu'**elle présente une âme de foret (19) avec un diamètre d'âme (K) constant ou décroissant dans la direction longitudinale (L) du foret.

6. Procédé pour fabriquer une goujure (10) dans la zone d'une pointe de foret (3) d'un foret hélicoïdal (2), comprenant plusieurs tranchants de coupe (4) reliés mutuellement par l'intermédiaire d'un tranchant transversal (6) et auxquels se raccordent des tranchants de coupe auxiliaires (14) s'étendant dans la direction longitudinale (L) du foret le long de la goujure (10), un angle de coupe auxiliaire (γ) étant défini entre une tangente (T) appliquée sur le côté intérieur (16) du tranchant de coupe auxiliaire (14) respectif et orientée perpendiculairement à la direction longitudinale (L) du foret, et la direction radiale (R), procédé selon lequel on engendre un angle de coupe auxiliaire (γ) qui est croissant dans la direction longitudinale (L) du foret,
**caractérisé en ce que** les tranchants de coupe principaux (4) sont réalisés de façon à s'étendre de manière rectiligne en direction du tranchant de coupe transversal (6).

7. Procédé selon la revendication 6, **caractérisé en ce que** l'angle de coupe auxiliaire (γ) croissant est engendré en une seule opération de rectification continue.

8. Procédé selon la revendication 7, **caractérisé en ce qu'**au cours de l'opération de rectification, une meule de rectification (22) et la pointe de foret (3) sont déplacées et guidées relativement l'une par rapport à l'autre dans l'espace, selon un mouvement à dimensions multiples.

9. Procédé selon la revendication 7 ou 8, **caractérisé en ce que** la meule de rectification (22) est réalisée sous forme de meule de rectification normalisée pouvant être utilisée pour plusieurs types de forets.

10. Procédé selon la revendication 6, **caractérisé en ce que** l'angle de coupe auxiliaire (γ) croissant, est réalisé par un procédé de moulage par injection.
